# FASCICULE DE BREVET EUROPEEN

(11) **EP 3 182 626 B1**
(45) Date de publication et mention de la délivrance du brevet: **29.08.2018**
(21) Numéro de dépôt: 16203364.1
(22) Date de dépôt: 12.12.2016
(51) Int. Cl.: H04K 3/00, H04B 17/10, H04B 17/16

(54) **PROCÉDÉ DE VERIFICATION DE BON FONCTIONNEMENT PAR REBOUCLAGE D'UN DISPOSITIF D'EMISSION/RÉCEPTION RADIOFREQUENCE**
ÜBERPRÜFUNGSVERFAHREN FÜR DAS GUTE FUNKTIONIEREN EINES FUNKFREQUENZ-SENDE-/EMFPANGSGERÄTS DURCH RÜCKKOPPELUNG
METHOD FOR VERIFYING THE CORRECT OPERATION BY FEEDBACK OF A RADIOFREQUENCY TRANSCEIVER DEVICE

(30) Priorité: 14.12.2015 FR 1502590
(43) Date de publication de la demande: 21.06.2017
(73) Titulaire: Thales, 92400 Courbevoie (FR)
(72) Inventeur: GALLAIS, Benoît, 49309 CHOLET (FR); GABIN, Alexis, 49309 CHOLET (FR); GERFAULT, Bertrand, 49309 CHOLET (FR)
(74) Mandataire: Dudouit, Isabelle

(56) Documents cités:
- US-A1- 2009 134 903
- US-A1- 2014 133 321
- US-A1- 2015 050 895

## Description

L'invention concerne un procédé permettant de vérifier le fonctionnement par rebouclage d'un dispositif émetteur d'un signal radiofréquence. L'invention s'applique, par exemple, à des signaux de communication ou à des signaux inhibiteurs, (perturbateurs de communications ou de fonctionnement de dispositifs).

Dans certaines applications, il est nécessaire de protéger une zone par émission de radiofréquences. Par exemple, les dispositifs perturbateurs de signaux sont déployés dans le but de garantir une protection des personnes. A ce titre, il est nécessaire d'assurer à un opérateur le bon fonctionnement d'un tel dispositif lors d'une mission. L'opérateur est donc tenu de contrôler les points suivants: la vérification d'un niveau de puissance émise en sortie du dispositif émetteur jusqu'à son antenne d'émission, la vérification de la fréquence d'émission du signal émis, la vérification du bon fonctionnement de la voie de réception, antenne comprise.

Actuellement, pour assurer cette fonction de contrôle, les opérationnels utilisent un système externe permettant de contrôler le bon fonctionnement d'un dispositif avant le départ en opération, selon une procédure de type go-nogo connue de l'homme du métier. Il existe différents types de dispositifs permettant de réaliser ces types de tests.

Pour les émetteurs à émission permanente, il est possible d'utiliser un dispositif de type analyseur de spectre. Pour les dispositifs possédant une fonction de réception, l'équipement de vérification doit également intégrer une fonction permettant de vérifier la capacité à détecter des signaux. Ce type de matériel présente en général l'inconvénient d'être coûteux et relativement complexe.

A la connaissance du demandeur, aucun des dispositifs de l'art antérieur ne permet d'effectuer un test du dispositif en cours de fonctionnement, sans utiliser de matériel externe au dispositif et de façon non onéreuse.

L'invention concerne un procédé pour vérifier le fonctionnement d'un dispositif comportant au moins un émetteur adapté à émettre des signaux radiofréquences et au moins un récepteur caractérisé en ce qu'il comporte au moins les étapes suivantes :
- Définir une plage de fréquence [Fₘᵢₙ, Fₘₐₓ] et une valeur de niveau de puissance d'émission d'un signal Sₚ émis par l'émetteur,
- Au cours de la phase d'émission du dispositif, émettre un signal Sp dans une plage de fréquence [F_{Pmin}, F_{Pmax}] et à une valeur de puissance P_{P}, les valeurs étant prédéfinies,
- Acquérir au niveau du récepteur du dispositif pendant une fenêtre temporelle Tₘₑₛ donnée et sur un ou plusieurs cycles, plusieurs signaux S_{PR}, utiliser une fonction qui compare au sein d'un cycle d'acquisition la valeur du niveau de signal reçu à la valeur du niveau du signal acquis précédemment et qui conserve le signal S_{PRmax} dont la valeur est maximale, conserver les valeurs maximales S_{PRmax} des signaux à chaque cycle d'acquisition et pour une plage de fréquence donnée,
- Pour chaque valeur de fréquence comprise dans la bande de fréquence [Fₘᵢₙ, Fₘₐₓ], comparer les valeurs maximales des signaux S_{PRmax} à au moins une valeur seuil Vₛₑᵤᵢₗ et définir le nombre de canaux dont la puissance est comprise dans un intervalle [Vₘᵢₙ, Vₘₐₓ], et si le nombre de canaux fréquentiels est inférieur à une valeur seuil Pₘᵢₙ prédéfinie, transmettre une information de fonctionnement incorrect à un module d'alerte.

Selon une variante de réalisation, on détermine le pourcentage de canaux et on vérifie que ce pourcentage est supérieur ou inférieur à une valeur de seuil Pₘᵢₙ attendue.

Selon une autre variante, on décale le démarrage des acquisitions des signaux S_{PR} au niveau de l'antenne de réception à chaque cycle émission/réception du dispositif. On définit, par exemple, un nombre Ndec de décalage temporel et on retarde le début des acquisitions des signaux S_{PR} d'une valeur de décalage temporel, jusqu'à avoir réalisé N nombre de décalages et s'il reste des phases d'acquisition à effectuer, alors on remet le décalage des acquisitions à zéro.

La valeur de fréquence minimale et la valeur de fréquence maximale dans laquelle on vérifie le fonctionnement du dispositif correspondent, par exemple, à la plage de fonctionnement du dispositif.

Selon une variante, on échantillonne le signal S_{PR} de contrôle de fonctionnement et on le transforme au moyen d'une transformation de Fourier.

L'invention concerne aussi un dispositif adapté à vérifier le bon fonctionnement d'au moins sa chaîne d'émission, le dispositif comportant au moins un émetteur et un récepteur, caractérisé en ce qu'il comporte un module adapté à mettre en oeuvre les étapes du procédé selon l'invention.

Le module permettant le contrôle reçoit le signal S_{PR} sous une forme échantillonnée et comporte au moins les éléments suivants :
- un masque adapté à sélectionner la plage de fréquence qui correspond aux bandes de fréquences définies dans un Plan Mémoire LOOP pour une mission donnée, ledit masque transmettant à un module « Max-hold » les valeurs de fréquences Fₛₑₗ sélectionnées par le masque,
- ledit module Max Hold étant adapté à mémoriser pour chaque canal fréquentiel Bi, la valeur maximale du signal S_{PR} durant un nombre d'acquisition défini (Nacq) dans le Plan Mémoire LOOP et à conserver uniquement les valeurs maximales des signaux S_{PRmax} enregistrés lors d'une acquisition, et à transmettre ces valeurs à un module de seuillage,
- le module de seuillage comprenant une ou plusieurs valeurs seuils Vₛₑᵤᵢₗ, ceci pour chaque valeur de fréquence Fₗ comprise dans la bande de fréquence [Fₘᵢₙ, Fₘₐₓ] définie dans le Plan Mémoire LOOP (24), adapté à transmettre vers un module de décision les valeurs issues du seuillage,
- ledit module de décision étant adapté à calculer le nombre de canaux dont la puissance est comprise entre deux valeurs seuils Vₘᵢₙ et Vₘₐₓ du module seuil, et à émettre un signal d'alerte si le nombre de canaux fréquentiels est inférieur à la valeur seuil Pₘᵢₙ définie dans le Plan Mémoire LOOP.

D'autres avantages et caractéristiques de la présente invention apparaîtront mieux à la lecture de la description d'un ou plusieurs exemples de réalisation donnés à titre illustratif et nullement limitatif annexés des figures qui représentent :
- Figure 1, un schéma fonctionnel du procédé selon l'invention,
- Figure 2, un détail de la partie fonction boucle selon l'invention,
- Figure 3, une représentation dans un diagramme, niveau dB, fréquence, d'un masque utilisé pour vérifier le bon fonctionnement du dispositif,
- Figures 4, 5, 6 un exemple d'IHM pour la programmation du procédé et de la fonction boucle,
- Figure 7, un exemple d'un enchaînement de séquences pour l'acquisition des signaux, et
- Figure 8, une variante de réalisation utilisant deux valeurs seuils.

Avant d'expliciter les caractéristiques techniques du procédé et du dispositif associé permettant de réaliser un test du fonctionnement d'un dispositif adapté à émettre un signal programmé sur une fréquence pour inhiber des moyens de communication, quelques éléments sur le fonctionnement de tels dispositifs sont rappelés ci-après.

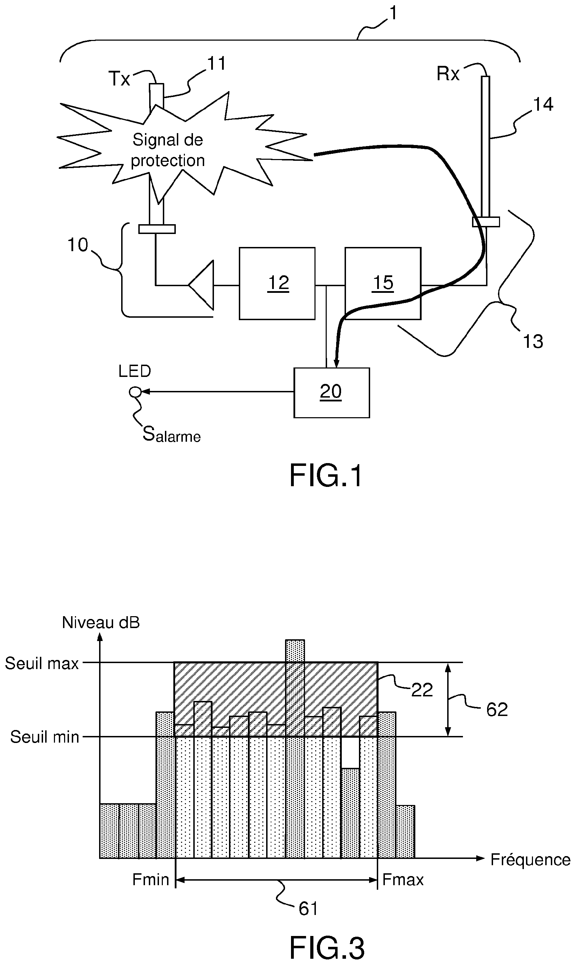

La figure 1 schématise un exemple de dispositif émetteur/récepteur de protection 1 adapté notamment à émettre un signal radiofréquence destiné à inhiber des communications dans une zone donnée. Le dispositif émetteur/récepteur comporte une voie d'émission 10 composée d'une antenne d'émission 11 adaptée à émettre à une fréquence d'émission Fₑ et d'une chaîne 12 assurant la formation du signal à émettre Sₑ. Le dispositif comporte aussi une voie de réception 13 comprenant une antenne de réception 14 reliée à une chaîne de traitement 15 des signaux reçus. Ces éléments sont connus de l'homme du métier et ne seront pas détaillés dans la présente description. Le signal émis par l'antenne d'émission et reçu au niveau de l'antenne de réception sera analysé par un module 20 (module contenant une fonction LOOP selon l'invention) ayant une sortie générant un signal d'alarme Sₐₗₐᵣₘₑ en cas de dysfonctionnement, comme il va être détaillé par la suite.

Dans un dispositif émetteur actif, la partie émission est adaptée pour émettre un signal dans une plage de fréquence, à un niveau de puissance et à une valeur de fréquence, les paramètres du signal étant choisis pour assurer l'inhibition des communications éventuellement présentes dans cette zone.

Dans un dispositif émetteur réactif, la voie de réception est utilisée pour scruter les signaux durant les phases de réception. Durant cette phase, le dispositif émetteur/récepteur est en mode silencieux. La voie d'émission est utilisée pour émettre des signaux en continu ou bien des signaux qui sont générés en réponse à un signal reçu lors de la phase de réception.

Le procédé selon l'invention repose notamment sur le principe suivant, le dispositif va rester en écoute sur la voie de réception lors d'une phase d'émission de signaux radiofréquences Sₚ. Pour cela, le dispositif comporte en plus des éléments des traitements classiques, un module comprenant plusieurs entrées/sorties et différents modules assurant des traitements appropriés du signal. L'antenne d'émission peut être séparée de l'antenne de réception.

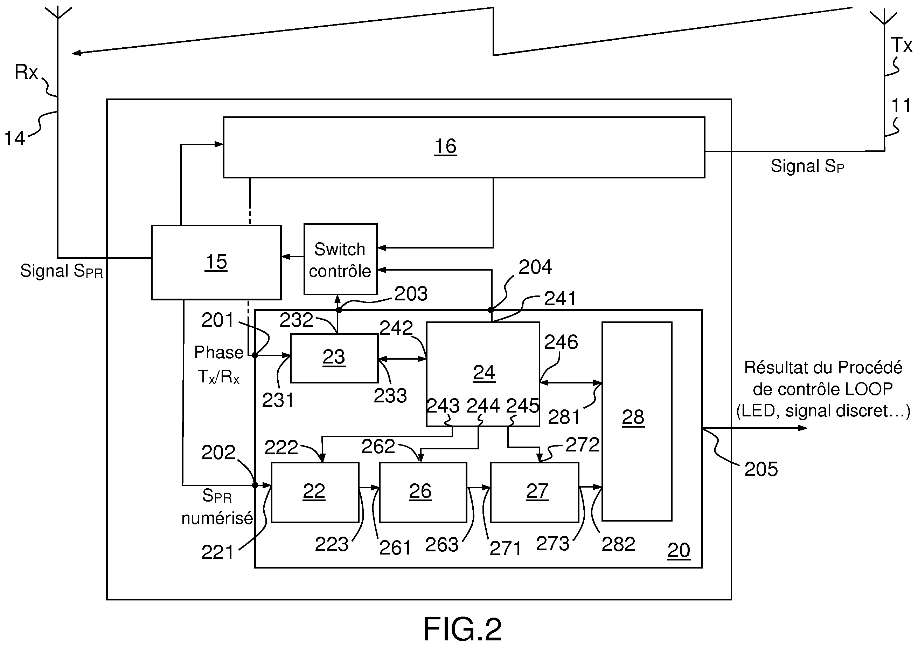

La figure 2 est un synoptique fonctionnel de la boucle ajoutée à la partie récepteur du dispositif modifié selon l'invention.

L'antenne d'émission 11 émet un signal radiofréquence S_{P} à une fréquence F_{P} qui va être reçu par l'antenne de réception 14 du dispositif émetteur/récepteur et la chaîne de traitement du récepteur. Le signal radiofréquence reçu S_{PR} par l'antenne de réception 14 est acquis pendant une fenêtre temporelle Tₘₑₛ et numérisé via une chaîne de réception et d'acquisition 15 pilotée par le module 20 comprenant une fonction LOOP. Le module 20 est adapté à vérifier les caractéristiques fonctionnelles du signal, notamment, la valeur de la puissance P_{PR} à laquelle il est émis, sa bande de fréquence [F_{PRmin}, F_{PRmax}], et à déclencher une alarme dans le cas où les paramètres mesurés ne sont pas conformes aux valeurs de puissance et de bande de fréquence prédéfinies pour une utilisation donnée.

Le module 20 reçoit la programmation dans un Plan Mémoire LOOP 24 qui est programmé en fonction du plan d'émission du procédé d'émission à contrôler 16.

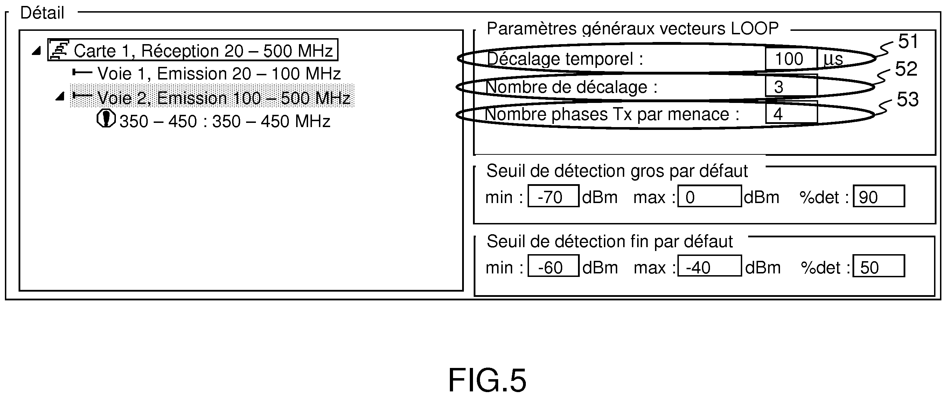

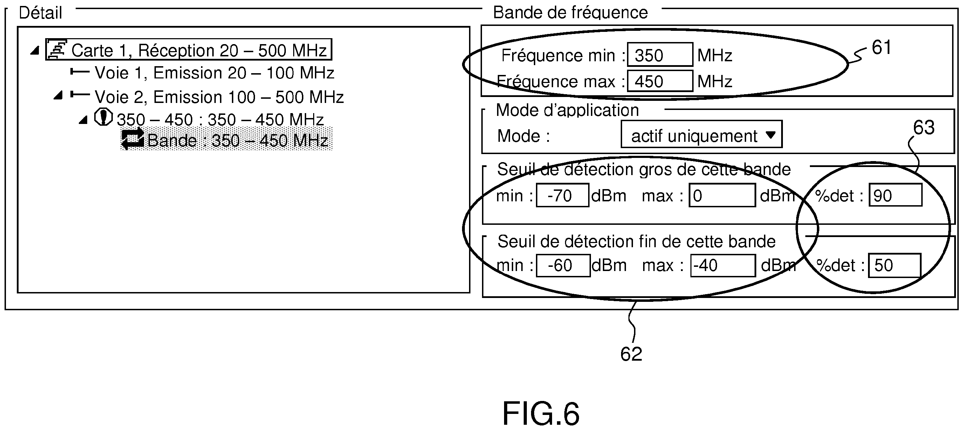

Le Plan Mémoire LOOP 24 contient les informations concernant le séquencement des contrôles comme il est représenté à la figure 5 :
- Durée du décalage temporel (Tdec), 51,
- Nombre de décalages temporels (Ndec), 52,
- Nombre de phase d'acquisition (Nacq), 53,
ainsi que les informations pour le contrôle des menaces à vérifier figure 6 :
- Plage de fréquence (Fmin et Fmax), 61,
- Seuils des puissances (Vmin et Vmax), 62,
- Pourcentage de bande occupée (Pmin), 63.

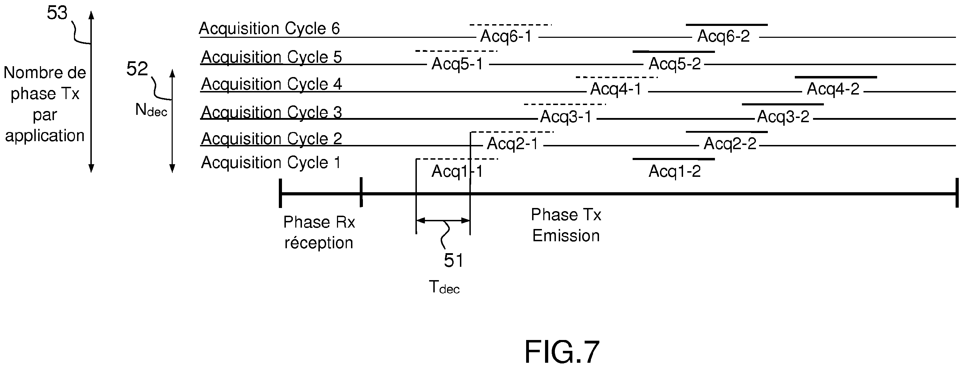

Le module 20 intègre un séquenceur 23 qui ordonnance le séquencement des vérifications des menaces selon le Plan Mémoire LOOP 24. En fonction de l'entrée de synchronisation Es, 201, (information de synchronisation qui va déclencher l'acquisition du signal et son traitement) reçue sur une entrée 231 du séquenceur et de la programmation contenue dans le Plan Mémoire LOOP 24. Le séquenceur 23 cale le début des acquisitions sur les phases d'émission (figure 7, sortie 233 du séquenceur, entrée 242) et gère les décalages temporels (Ndec : nombre de décalages et Tdec : durée de décalage) des acquisitions par sa sortie 232. La bande de fréquence acquise est programmée dans la chaîne d'acquisition 15 par le Plan Mémoire LOOP 24 par la sortie 204 du module 20 (sortie 241 du Plan Mémoire LOOP).

Le module 20 comprend une deuxième entrée 202 qui reçoit le signal S_{PR} sous une forme échantillonnée après traitement par une analyse spectrale (par exemple une transformation de Fourier) et le transmet à un module ou masque fréquentiel 22 pour ne conserver que la bande de fréquence à contrôler définie dans le Plan Mémoire LOOP 24 par l'intervalle [Fₘᵢₙ, Fₘₐₓ].

Le masque 22 est adapté à sélectionner la plage de fréquence qui correspond aux bandes de fréquences définies dans le Plan Mémoire LOOP 24 pour la mission donnée ou plan d'émission (sortie 243 du Plan Mémoire LOOP). La fonction LOOP prend le contrôle de la chaîne de réception Rx afin de programmer les plages de fréquences à contrôler. Par exemple, il est possible de mettre à zéro les valeurs de fréquence qui n'appartiennent pas à la bande de fréquence prédéfinie, qui ne sont pas contenues dans le masque selon un exemple donné à la figure 3.

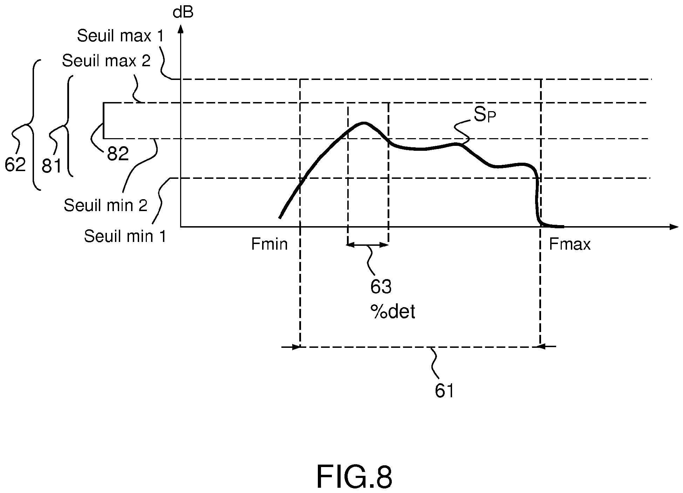

Le signal spectral filtré par le masque est transmis via une sortie 223 à un module Max Hold 26. Le module « Max-hold » 26 reçoit (entrée 261) les valeurs de fréquences Fₛₑₗ sélectionnées par le masque 22. Le module Max Hold 26 mémorise, pour chaque canal fréquentiel Bi la valeur maximale du signal S_{PR} durant un nombre d'acquisitions défini (Nacq) dans le Plan Mémoire LOOP 24 (information transmise via une entrée 262, sortie 244 du Plan Mémoire LOOP). Le résultat de mesure (résultat mémorisé au sein du module Max Hold) est réactualisé uniquement lorsque le module Max Hold trouve une nouvelle valeur de signal supérieure à la valeur maximale S_{PRmax} enregistrée lors d'une acquisition. En sortie 263 du module Max_hold 26, on dispose des valeurs des crêtes S_{PRmax} des signaux. Ces valeurs crêtes sont transmises à un module seuil 27 (via une entrée 271) qui les compare à une ou plusieurs valeurs seuils Vₛₑᵤᵢₗ, ceci pour chaque valeur de fréquence FI comprise dans la bande de fréquence [Fₘᵢₙ, Fₘₐₓ] définie dans le Plan Mémoire LOOP 24 enregistrée, information transmise par la sortie 245 du plan mémoire LOOP 24 et l'entrée 272 du module seuil. Le signal est considéré comme bon s'il est compris entre les seuils Vmin et Vmax (figure 8).

Un module de décision 28 reçoit le résultat du module seuil 27 (via une sortie 273 et une entrée 282 du module décision) et calcule le nombre de canaux dont la puissance est comprise entre les seuils Vₘᵢₙ et Vₘₐₓ du module Seuil 27 (sortie 275 du module seuil et entrée 282 du module décision). Si le nombre de canaux fréquentiels, exprimé en pourcentage ou en une autre unité, est inférieur à la valeur seuil Pₘᵢₙ définie dans le Plan Mémoire LOOP 24, alors le module de décision 28 émet un signal Sₐₗₑᵣₜₑ par la sortie 205 indiquant un dysfonctionnement du dispositif émetteur, par exemple.

Le signal d'alerte Sₐₗₑᵣₜₑ est par exemple transmis à un dispositif de type LED indiquant un comportement erroné dans le fonctionnement du dispositif, sur réception du signal issu du module seuil, ou encore à un dispositif permettant de corriger la valeur de la puissance d'émission et/ou la valeur de fréquence d'émission du dispositif.

Le module 20 peut être implémenté dans un dispositif de type circuit logique programmable FPGA (Field Programmable Gâte Array) qui est programmé de manière classique pour piloter le fonctionnement du dispositif émetteur-récepteur dans son fonctionnement classique selon l'art antérieur.

Les figures suivantes 3 à 7 illustrent sans limiter le procédé selon l'invention, un exemple de programmation et de fonctionnement du dispositif.

La figure 3 illustre dans un diagramme niveau de signal acquis-fréquence, dans une bande de fréquence prédéterminée [Fₚₘᵢₙ, Fₚₘₐₓ] le niveau de signaux acquis au cours d'une séquence d'acquisition. Un masque 22 est par exemple défini par le choix d'une plage de fréquence et deux niveaux seuils de puissance pour le signal émis.

Pour configurer le module de contrôle du fonctionnement, on utilise, par exemple, les paramètres suivants :
- La bande de fréquence que l'on souhaite protéger,
- La valeur de puissance à émettre,
- Le mode d'application éventuellement.

Dans le mode de contrôle, le récepteur va prendre la main pendant la phase d'émission et effectuer les acquisitions et les calculs nécessaires pour contrôler les paramètres du signal émis par l'antenne d'émission.

Plusieurs modes de fonctionnement du dispositif peuvent être mis en oeuvre. Par exemple, un mode actif correspond à une émission d'une forme d'onde active. Dans un mode réactif, le dispositif de protection émettra un signal en réaction à la réception d'un signal émis par un tiers. Il est aussi possible d'envisager l'utilisation d'un mode hybride.

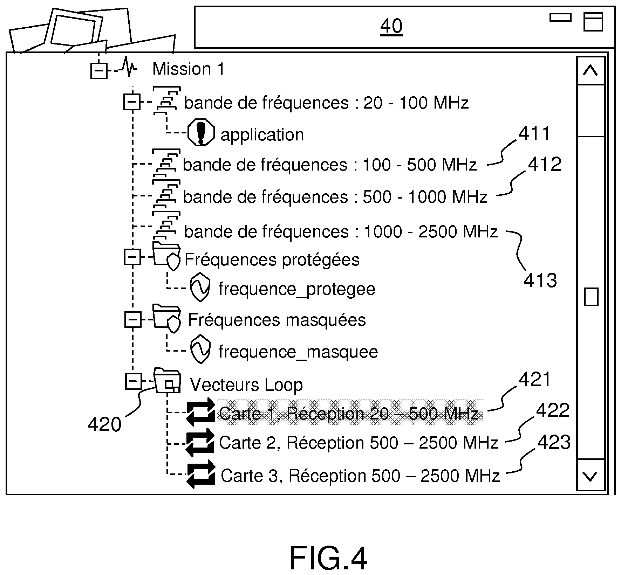

La figure 4 illustre un exemple d'interface utilisateur 40 qui indique plusieurs bandes de fréquences 411, 412, 413 pouvant être utilisées pour le dispositif de protection, et un paramètre indiqué vecteur LOOP 420 associé à différentes cartes et différentes bandes de réception 421, 422, 423.

En sélectionnant une carte et une bande de réception, figure 5, par exemple la bande 20-500MHz, 421 et pour une bande de fréquence donnée pour l'application initiale 350-450MHz, l'utilisateur accède aux paramètres génériques utilisés pour toutes les vérifications LOOP. Ces paramètres génériques sont, par exemple, le décalage temporel entre deux acquisitions, 51, le nombre de décalages dans la bande de fréquence initiale, 52, le nombre de phases d'émission d'un signal dans la bande de fréquence initiale, 53, une ou plusieurs valeurs de seuils de détection pour le niveau de puissance mesuré sur le signal reçu, 54. Les paramètres génériques sont les paramètres de base lors de la création d'une nouvelle vérification de fonctionnement. La modification de ces paramètres ne prend effet que sur les prochaines vérifications créées.

Les paramètres spécifiques associés à un vecteur LOOP sont accessibles pour une bande de vérification de fonctionnement donnée. Les paramètres spécifiques sont propres à chaque programmation, figure 6. Les paramètres spécifiques sont par exemple les suivants : la bande de fréquence à vérifier 61, un ou plusieurs seuils de détection 62, la valeur fixée pour le pourcentage 63 de canaux.

La figure 8 illustre une variante de réalisation prenant en compte deux plages de seuils, [Vₘᵢₙ₁, Vₘₐₓ₁], 81, [Vₘᵢₙ₂, Vₘₐₓ₂], 82.

Les bandes de fréquences et les niveaux de puissance à contrôler seront paramétrés lors de la préparation de la mission.

L'exemple a été donné dans le cas où l'on utilise, pour vérifier le fonctionnement du dispositif, la chaîne de réception existante dans un dispositif adapté à émettre des signaux ayant pour fonction de perturber un environnement. Sans sortir du cadre de l'invention, il serait aussi possible d'ajouter une deuxième chaîne de réception traitant uniquement le signal reçu.

Le procédé selon l'invention permet de contrôler le fonctionnement du dispositif « in-situ » lorsque le dispositif est actif pour une mission donnée, lors d'une utilisation opérationnelle sans nécessiter l'utilisation de dispositifs externes. Il permet notamment de valider les fonctionnalités de réception, l'algorithme de lecture des signaux d'émission, les modules de conversion, l'amplificateur, l'antenne d'émission impliqués dans le fonctionnement du dispositif.

## Revendications

1. Procédé pour vérifier le fonctionnement d'un dispositif (1) comportant au moins un émetteur (10, 11) adapté à émettre des signaux radiofréquences et au moins un récepteur (13, 14) **caractérisé en ce qu'**il comporte au moins les étapes suivantes :
• Définir une plage de fréquence [Fₘᵢₙ, Fₘₐₓ] et une valeur de niveau de puissance d'émission d'un signal Sₚ émis par l'émetteur,
• Au cours de la phase d'émission du dispositif, émettre un signal Sp dans une plage de fréquence [F_{Pmin}, F_{Pmax}] et à une valeur de puissance P_{P}, les valeurs étant prédéfinies,
• Acquérir au niveau du récepteur du dispositif pendant une fenêtre temporelle Tₘₑₛ donnée et sur un ou plusieurs cycles, plusieurs signaux S_{PR}, utiliser une fonction (20) qui compare au sein d'un cycle d'acquisition la valeur du niveau de signal reçu à celui acquis précédemment et qui conserve le signal S_{PRmax} dont la valeur est maximale, conserver les valeurs maximales S_{PRmax} des signaux à chaque cycle d'acquisition et pour une plage de fréquence donnée,
• Pour chaque valeur de fréquence comprise dans la bande de fréquence [Fₘᵢₙ, Fₘₐₓ], comparer les valeurs maximales des signaux S_{PRmax} à au moins une valeur seuil Vₛₑᵤᵢₗ et définir le nombre de canaux dont la puissance est comprise dans un intervalle [Vₘᵢₙ, Vₘₐₓ], si le nombre de canaux fréquentiels est inférieur à une valeur seuil Pₘᵢₙ prédéfinie, transmettre une information de fonctionnement incorrect à un module d'alerte.

2. Procédé selon la revendication 1 **caractérisé en ce que** l'on mesure le pourcentage de canaux et on vérifie que ce pourcentage est supérieur ou inférieur à la valeur de seuil Pₘᵢₙ attendue.

3. Procédé selon l'une des revendications 1 à 2 **caractérisé en ce que** l'on décale le démarrage des acquisitions des signaux S_{PR} au niveau de l'antenne de réception à chaque cycle émission/réception du dispositif.

4. Procédé selon la revendication 3 **caractérisé en ce que** l'on définit un nombre Ndec de décalage temporel et on retarde le début des acquisitions des signaux S_{PR} d'une valeur de décalage temporel jusqu'à avoir réalisé N nombre de décalages et s'il reste des phases d'acquisition à effectuer, alors on remet le décalage des acquisitions à zéro.

5. Procédé selon la revendication 1 **caractérisé en ce que** la valeur de fréquence minimale et la valeur de fréquence maximale dans laquelle on vérifie le fonctionnement du dispositif correspondent à la plage de fonctionnement du dispositif.

6. Procédé selon l'une des revendications 1 à 5 **caractérisé en ce que** l'on échantillonne le signal S_{PR} de contrôle de fonctionnement et on le transforme au moyen d'une transformation de Fourier

7. Procédé selon l'une des revendications 1 à 6 **caractérisé en ce que** le signal S_{PR} émis est un signal perturbateur.

8. Dispositif (1) comportant au moins un émetteur (10,11) et un récepteur (13,14), et étant adapté à vérifier le bon fonctionnement de la chaîne d'émission dudit au moins un émetteur (10, 11), le dispositif étant **caractérisé en ce qu'**il comporte un module (20) adapté à mettre en oeuvre les étapes du procédé selon l'une des revendications 1 à 7.

9. Dispositif selon la revendication 8 **caractérisé en ce que** ledit module (20) reçoit le signal S_{PR} sous une forme échantillonnée et comporte au moins les éléments suivants :
• un masque (22) adapté à sélectionner la plage de fréquence qui correspond aux bandes de fréquences définies dans un Plan Mémoire LOOP (24) pour une mission donnée, ledit masque (22) transmettant à un module « Max-hold » (26) les valeurs de fréquences Fₛₑₗ sélectionnées par le masque (22),
• ledit module Max Hold (26) étant adapté à mémoriser pour chaque canal fréquentiel Bi, la valeur maximale du signal S_{PR} durant un nombre d'acquisition défini (Nacq) dans le Plan Mémoire LOOP (24), et à conserver uniquement les valeurs maximales des signaux S_{PRmax} enregistrés lors d'une acquisition, et à transmettre ces valeurs à un module de seuillage,
• le module (27) de seuillage comprenant une ou plusieurs valeurs seuils Vₛₑᵤᵢₗ, ceci pour chaque valeur de fréquence FI comprise dans la bande de fréquence [Fₘᵢₙ, Fₘₐₓ] définie dans le Plan Mémoire LOOP (24), adapté à transmettre vers un module de décision (28) les valeurs issues du seuillage,
• ledit module de décision (28) étant adapté à calculer le nombre de canaux dont la puissance est comprise entre deux valeurs seuils Vₘᵢₙ et Vₘₐₓ du module seuil (27), et à émettre un signal d'alerte si le nombre de canaux fréquentiels est inférieur à la valeur seuil Pₘᵢₙ définie dans le Plan Mémoire LOOP (24).

10. Dispositif selon l'une des revendications 8 ou 9 **caractérisé en ce que** le signal émis est un signal perturbateur.

## Patentansprüche

1. Verfahren, um die Betriebsweise einer Vorrichtung (1) zu überprüfen, die mindestens einen Sender (10, 11), der angepasst ist, um Hochfrequenzsignale auszusenden, und mindestens einen Empfänger (13, 14) aufweist, **dadurch gekennzeichnet, dass** es mindestens die folgenden Schritte aufweist:
• Definieren eines Frequenzbereichs [Fₘᵢₙ, Fₘₐₓ] und eines Sendeleistungspegelwerts eines durch den Sender ausgestrahlten Signals Sₚ,
• Aussenden eines Signals Sₚ in einem Frequenzbereich [F_{Pmin}, F_{Pmax}] und mit einem Leistungswert Pₚ während der Sendephase der Vorrichtung, wobei die Werte vordefiniert sind,
• Erfassen mehrerer Signale S_{PR} auf der Stufe des Empfängers der Vorrichtung während eines bestimmten Zeitfensters Tₘₑₛ und über einen oder mehrere Zyklen, Verwenden einer Funktion (20), die innerhalb eines Erfassungszyklus den Wert der Stufe des empfangenen Signals mit dem vorher erfassten vergleicht und die das Signal S_{PRmax} beibehält, dessen Wert maximal ist, Beibehalten der Maximalwerte S_{PRmax} der Signale bei jedem Erfassungszyklus und für einen bestimmten Frequenzbereich,
• Vergleichen der Maximalwerte der Signale S_{PRmax} mit mindestens einem Schwellenwert V_{Schwelle} für jeden Frequenzwert, der in dem Frequenzband [Fₘᵢₙ, Fₘₐₓ] liegt, und Definieren der Anzahl der Kanäle, deren Leistung in einem Intervall [Vₘᵢₙ, Vₘₐₓ] liegt, wenn die Anzahl der Frequenzkanäle kleiner als ein vordefinierter Schwellenwert Pₘᵢₙ ist, Übertragen einer Information einer fehlerhaften Betriebsweise an ein Alarmmodul.

2. Verfahren nach Anspruch 1, **dadurch gekennzeichnet, dass** der Prozentsatz der Kanäle gemessen wird und geprüft wird, dass dieser Prozentsatz größer oder kleiner als der erwartete Schwellenwert Pₘᵢₙ ist.

3. Verfahren nach einem der Ansprüche 1 bis 2, **dadurch gekennzeichnet, dass** der Beginn der Signalerfassungen S_{PR} hinsichtlich der Empfangsantenne bei jedem Sende-/Empfangszyklus der Vorrichtung verschoben wird.

4. Verfahren nach Anspruch 3, **dadurch gekennzeichnet, dass** eine Anzahl von Zeitverschiebungen Ndec definiert wird und der Beginn der Signalerfassungen S_{PR} eines Zeitverschiebungswertes verzögert wird, bis eine Anzahl von N Verschiebungen ausgeführt wurde, und wenn noch Erfassungsphasen auszuführen bleiben, wird die Erfassungsverschiebung auf Null zurückgesetzt.

5. Verfahren nach Anspruch 1, **dadurch gekennzeichnet, dass** der minimale Frequenzwert und der maximale Frequenzwert, in dem die Vorrichtungsbetriebsweise geprüft wird, dem Bereich der Vorrichtungsbetriebsweise entsprechen.

6. Verfahren nach einem der Ansprüche 1 bis 5, **dadurch gekennzeichnet, dass** das Signal S_{PR} der Betriebsweisekontrolle abgetastet wird und mittels einer FourierTransformation umgewandelt wird.

7. Verfahren nach einem der Ansprüche 1 bis 6, **dadurch gekennzeichnet, dass** das ausgestrahlte Signal S_{PR} ein Störsignal ist.

8. Vorrichtung (1), die mindestens einen Sender (10, 11) und einen Empfänger (13, 14) aufweist und angepasst ist, die korrekte Betriebsweise der Sendekette des mindestens einen Senders (10, 11) zu überprüfen, wobei die Vorrichtung **dadurch gekennzeichnet ist, dass** sie ein Modul (20) aufweist, das angepasst ist, um die Schritte des Verfahrens nach einem der Ansprüche 1 bis 7 durchzuführen.

9. Vorrichtung nach Anspruch 8, **dadurch gekennzeichnet, dass** das Modul (20) das Signal S_{PR} in einer abgetasteten Form empfängt und mindestens die folgenden Elemente aufweist:
• eine Maske (22), die angepasst ist, den Frequenzbereich auszuwählen, der den in einem Speicherplan LOOP (24) für einen gegebenen Einsatz definierten Frequenzbändern entspricht, wobei die Maske (22) die durch die Maske (22) ausgewählten Frequenzwerte Fₛₑₗ an ein Modul "Max-Hold" (26) überträgt,
• wobei das Modul Max-Hold (26) angepasst ist, für jeden Frequenzkanal Bi den Maximalwert des Signals S_{PR} während einer definierten Anzahl von Erfassungen (Nacq) in dem Speicherplan LOOP (24) zu speichern und nur die anlässlich einer Erfassung aufgezeichneten Maximalwerte der Signale S_{PRmax} beizubehalten und diese Werte an ein Modul für Schwellenwertbestimmung zu übertragen,
• wobei das Modul (27) für Schwellenwertbestimmung einen oder mehrere Schwellenwerte V_{Schwelle} umfasst, wobei dieses für jeden Frequenzwert FI in dem in dem Speicherplan LOOP (24) definierten Frequenzband [Fₘᵢₙ, Fₘₐₓ] liegt, der angepasst wird, die von dem Schwellenwert stammenden Werte zu einem Entscheidungsmodul (28) zu übertragen,
• wobei das Entscheidungsmodul (28) angepasst wird, die Anzahl der Kanäle zu berechnen, deren Leistung zwischen zwei Schwellenwerten Vₘᵢₙ und Vₘₐₓ des Schwellenwertmoduls (27) liegt, und ein Alarmsignal auszusenden, wenn die Anzahl der Frequenzkanäle kleiner als der in dem Speicherplan LOOP (24) definierte Schwellenwert Pₘᵢₙ ist.

10. Vorrichtung nach einem der Ansprüche 8 oder 9, **dadurch gekennzeichnet, dass** das ausgestrahlte Signal ein Störsignal ist.

## Claims

1. Method for checking the operation of a device (1) comprising at least one transmitter (10, 11) adapted to transmit radiofrequency signals and at least one receiver (13, 14) **characterized in that** this comprises at least the following steps:
• defining a frequency range [Fₘᵢₙ, Fₘₐₓ] and a transmission-power-level value of a signal Sₚ transmitted by the transmitter;
• during the transmitting phase of the device, transmitting a signal S_{P} in a frequency range [F_{Pmin}, F_{Pmax}] and with a power value P_{P}, these values being predefined;
• acquiring, in the receiver of the device, during a given time window Tₘₑₛ and over one or more cycles, a plurality of signals S_{PR}; using a function (20) that compares, within an acquisition cycle, the value of the received signal level to that acquired beforehand and that retains the signal S_{PRmax} of maximum value; retaining the maximum values S_{PRmax} of the signals in each acquisition cycle and for a given frequency range;
• for each frequency value comprised in the frequency band [Fₘᵢₙ, Fₘₐₓ], comparing the maximum values of the signals S_{PRmax} to at least one threshold value V_{threshold} and determining the number of channels in which the power is comprised in an interval [Vₘᵢₙ, Vₘₐₓ]; and if the number of frequency channels is lower than a predefined threshold value Pₘᵢₙ, transmitting a datum indicating incorrect operation to a warning module.

2. Method according to Claim 1, **characterized in that** the percentage of channels is measured and it is checked whether this percentage is higher or lower than the expected threshold value Pₘᵢₙ.

3. Method according to either of Claims 1 and 2, **characterized in that** the start of the acquisitions of the signals S_{PR} by the receiving antenna in each transmission/reception cycle of the device is shifted.

4. Method according to Claim 3, **characterized in that** a number Ndec of time shifts is defined and the start of the acquisitions of the signals S_{PR} is delayed by one time-shift value until the number of shifts reaches N and if there remain acquisition phases to be carried out, then the shift of the acquisitions is reset to zero.

5. Method according to Claim 1, **characterized in that** the minimum frequency value and the maximum frequency value between which the operation of the device is checked correspond to the operating range of the device.

6. Method according to one of Claims 1 to 5, **characterized in that** the signal S_{PR} used to inspect operation is sampled and transformed by means of a Fourier transform.

7. Method according to one of Claims 1 to 6, **characterized in that** the transmitted signal S_{PR} is a jamming signal.

8. Device (1) comprising at least one transmitter (10, 11) and one receiver (13, 14), and being able to check whether the transmission chain of said at least one transmitter (10, 11) is operating correctly, the device being **characterized in that** it comprises a module (20) able to implement the steps of the method according to any one of Claims 1 to 7.

9. Device according to Claim 8, **characterized in that** said module (20) receives the signal S_{PR} in a sampled form and comprises at least the following components:
• a mask (22) adapted to select the frequency range that corresponds to the frequency bands defined in a LOOP memory plane (24) for a given mission, said mask (22) passing to a max-hold module (26) the frequency values Fₛₑₗ selected by the mask (22),
• said max-hold module (26) being adapted to store in the LOOP memory plane (24), for each frequency channel Bᵢ, the maximum value obtained for the signal S_{PR} over a defined number of acquisitions (Nacq), and to retain only the maximum values of the signals S_{PRmax} recorded during an acquisition, and to transmit these values to a thresholding module,
• the thresholding module (27) comprising one or more threshold values V_{threshold} for each frequency value Fl comprised in the frequency band [Fₘᵢₙ, Fₘₐₓ] defined in the LOOP memory plane (24) and being adapted to transmit to a decision module (28) the values generated by the thresholding,
• said decision module (28) being adapted to calculate the number of channels in which the power is comprised between two threshold values Vₘᵢₙ and Vₘₐₓ of the thresholding module (27), and to transmit a warning signal if the number of frequency channels is lower than a threshold value Pₘᵢₙ defined in the LOOP memory plane (24).

10. Device according to either of Claims 8 or 9, **characterized in that** the transmitted signal is a jamming signal.
